# EUROPÄISCHE PATENTSCHRIFT

(11) **EP 3 700 797 B1**
(45) Veröffentlichungstag und Bekanntmachung des Hinweises auf die Patenterteilung: **26.10.2022**
(21) Anmeldenummer: 18815582.4
(22) Anmeldetag: 30.11.2018
(51) Int. Cl.: B61D 17/02

(54) **SCHIENENFAHRZEUG UND VERFAHREN ZUR BEEINFLUSSUNG EINER LUFTSTRÖMUNG**
RAIL VEHICLE AND METHOD FOR INFLUENCING AN AIR FLOW
VÉHICULE FERROVIAIRE ET PROCÉDÉ PERMETTANT D'AGIR SUR UN ÉCOULEMENT D'AIR

(30) Priorität: 27.12.2017 DE 102017223796
(43) Veröffentlichungstag der Anmeldung: 02.09.2020
(73) Patentinhaber: Siemens Mobility GmbH, 81739 München (DE)
(72) Erfinder: KIRCHNER, Towje, 51067 Köln (DE); KNIPPING, Arndt, 47829 Krefeld (DE); RODRIGUEZ AHLERT, Carlos-Jose, 52538 Selfkant (DE); SCHMIDT, Eckhard, 40549 Düsseldorf (DE); WIETRECK, Falk, 41065 Mönchengladbach (DE)
(86) Internationale Anmeldenummer: PCT/EP2018/083165
(87) Internationale Veröffentlichungsnummer: WO 2019/129458

(56) Entgegenhaltungen:
- CN-A- 105 620 500
- JP-A- 2009 132 361
- JP-A- 2011 168 158
- JP-A- 2015 120 503
- US-A- 1 584 275
- US-A- 2 182 640

## Beschreibung

Die Erfindung betrifft einen Schienenfahrzeugverbund, umfassend ein vorfahrendes Schienenfahrzeug mit zumindest einem an einem nachlaufenden Ende des vorfahrenden Schienenfahrzeugs angeordneten Kopfbereich, wobei die Form des Kopfbereichs (6) zumindest im Bereich seines Daches zumindest in Längsrichtung des vorfahrenden Schienenfahrzeugs zumindest teilweise konvex ist, und ein einen Dachstromabnehmer aufweisendes, nachfahrendes Schienenfahrzeug .

Werden mehrere, beispielsweise zwei, Schienenfahrzeuge zu einem Schienenfahrzeugverbund gekoppelt, so wird bei einer Fahrt dieses Schienenfahrzeugverbunds eine Luftströmung über den Schienenfahrzeugverbund hinweg von dem Kuppelbereich beeinflusst.

Weist beispielsweise das vorfahrende Schienenfahrzeug zumindest an seinem nachlaufenden Ende einen Kopfbereich auf, wobei die Form des Kopfbereichs zumindest im Bereich seines Daches in Längsrichtung des Schienenfahrzeugs zumindest teilweise konvex ist, so kann es bei der Fahrt beispielsweise bei dem Übergang in den konvexen Bereich zu einer Ablösung der Luftströmung kommen. Die Luftströmung folgt dann nicht dem konvexen Bereich, sondern geht nach oben weg. Auf diese Weise entsteht ein Unterdruck in dem Kuppelbereich, d. h. zwischen dem vorfahrenden und dem nachfahrenden Schienenfahrzeug.

Ein Teil der Luft, welche an den Seiten des vorfahrenden Schienenfahrzeugs vorbei strömt, strömt aufgrund des Unterdrucks in den Kuppelbereich hinein und wird dann nach oben abgelenkt. Dieser Effekt beeinflusst auch die Luftströmung über das nachfahrende Schienenfahrzeug hinweg.

Sind die Schienenfahrzeuge beispielsweise elektrifiziert und weisen - insbesondere auf ihrem Dach - einen Dachstromabnehmer zur Abnahme elektrischer Energie von einer Oberleitung auf, so wird durch die zuvor genannten Effekte die Anströmung des Dachstromabnehmers des nachfahrenden Schienenfahrzeugs beeinflusst. Insbesondere weist die Luftströmung am Dachstromabnehmer des nachfahrenden Schienenfahrzeugs eine geringere Strömungsgeschwindigkeit auf als am Dachstromabnehmer des vorfahrenden Schienenfahrzeugs. Auf diese Weise wird ein Anpressdruck des Dachstromabnehmers des nachfahrenden Schienenfahrzeugs gegen die Oberleitung reduziert.

Das Dokument US 2 182 640 A befasst sich mit der Problematik der Luftströmung an einem Dachstromabnehmer, wobei dieser Dachstromabnehmer jedoch nicht auf dem Dach eines nachfahrenden Schienenfahrzeugs angeordnet ist, sondern auf dem ersten Schienenfahrzeug eines Schienenfahrzeugverbunds.

Bisher wurde durch eine geschickte Gestaltung des Dachstromabnehmers selbst versucht, den Anpressdruck gegen die Oberleitung zu optimieren. Beispielsweise kann der Anpressdruck über verstellbare Bleche an einem Arm des Dachstromabnehmers eingestellt werden. Hierzu ist jedoch eine Steuerung der Blechstellungen nötig. Ein solches Vorgehen ist jedoch nicht für alle Schienenfahrzeuge anwendbar. Außerdem geht die Steuerung mit erhöhten Kosten und mit erhöhter Fehleranfälligkeit einher.

Eine Aufgabe der Erfindung ist es, einen Schienenfahrzeugverbund anzugeben, mit dem auf einfache Weise, insbesondere auf fehlerunanfällige Weise, der Anpressdruck des Dachstromabnehmers in der gewünschten Höhe aufrechtgehalten wird.

Die Aufgabe wird gelöst durch ein Schienenfahrzeugverbund der eingangs genannten Art, welcher erfindungsgemäß zumindest einen Flügel aufweist, welcher zur Erhöhung der Strömungsgeschwindigkeit an dem Dachstromabnehmer des nachfahrenden Schienenfahrzeugs im Kopfbereich des vorfahrenden Schienenfahrzeugs auf dem Dach zumindest teilweise in dem konvexen Bereich angeordnet ist, wobei eine Form des Flügels zumindest im Wesentlichen einer Form des Kopfbereichs folgt.

Der Flügel kann auf einfache Weise die Luftströmung beeinflussen. Vorzugsweise ist die Funktionsweise des Flügels fehlerresistent.

Der Kopfbereich ist an einem nachlaufenden Ende des Schienenfahrzeugs angeordnet. Auf diese Weise kann der Flügel eine Luftströmung derart beeinflussen, dass bei der Fahrt im Schienenfahrzeugverbund eine Strömungsgeschwindigkeit an einem Dachstromabnehmer eines nachfahrenden Schienenfahrzeugs des Schienenfahrzeugverbunds erhöht wird. Weiter kann der Flügel einen Unterschied zwischen der Strömungsgeschwindigkeit an dem Dachstromabnehmer des nachfahrenden Schienenfahrzeugs und der Strömungsgeschwindigkeit an einem Dachstromabnehmer des erstgenannten Schienenfahrzeugs reduzieren. Ist im Folgenden von einem Schienenfahrzeug die Rede, so ist vorzugsweise das erstgenannte Schienenfahrzeug gemeint.

Bei der Fahrt des Schienenfahrzeugs kann der Flügel außerdem eine Aerodynamik des Schienenfahrzeugs verbessern. D. h. auch bei einer Fahrt des Schienenfahrzeugs allein kann der Flügel eine Luftströmung positiv beeinflussen. Insbesondere kann bei der Fahrt des Schienenfahrzeugs durch den Flügel ein Luftwiderstand des Schienenfahrzeugs reduziert werden. Eine solche Einzelaufstellung eines Schienenfahrzeugs gehört jedoch nicht zum Schutzumfang der beigefügten Ansprüche.

Zusammenfassend kann der Flügel bei der Fahrt des Schienenfahrzeugs allein und/oder bei der Fahrt des Schienenfahrzeugs im Schienenfahrzeugverbund eine Luftströmung positiv beeinflussen.

Als Kopfbereich, welcher zumindest im Bereich seines Daches zumindest in Längsrichtung des Schienenfahrzeugs zumindest teilweise konvex ist, kann ein Kopfbereich aufgefasst werden, dessen Höhe zumindest in einem Abschnitt des Kopfbereichs mit wachsendem Abstand zu einer Schienenfahrzeugmitte reduziert ist/wird. Die Reduktion der Höhe nimmt zweckmäßigerweise mit zunehmendem Abstand zur Schienenfahrzeugmitte immer weiter zu. Aufgrund dieser Reduktion folgt zweckmäßigerweise in Längsrichtung des Schienenfahrzeugs in diesem Abschnitt des Kopfbereichs eine Wölbung des Kopfbereichs nach außen.

Als Schienenfahrzeugmitte kann eine Mitte des Schienenfahrzeugs in Längsrichtung des Schienenfahrzeugs aufgefasst werden.

Als "eine Form des Flügels, welche zumindest im Wesentlichen einer Form des Kopfbereichs folgt", kann eine Form des Flügels aufgefasst werden, welche zumindest im Wesentlichen der Form des Kopfbereichs in demjenigen Bereich folgt, in dem der Flügel angeordnet ist. Zweckmäßigerweise folgt die Form des Flügels zumindest im Wesentlichen der Form des Kopfbereichs zumindest in Längsrichtung des Schienenfahrzeugs. Weiter ist es bevorzugt, wenn die Form des Flügels zumindest im Wesentlichen der Form des Kopfbereichs in Längsrichtung und in Querrichtung des Schienenfahrzeugs folgt.

Als Flügel kann ein Element aufgefasst werden, welches beidseitig umströmt wird. Insbesondere kann sowohl eine Oberseite des Flügels als auch eine Unterseite des Flügels umströmt werden. Es ist bevorzugt, wenn der Flügel plattenförmig ist.

Es ist zweckmäßig, wenn der Flügel beabstandet zu dem Dach angeordnet ist. Auf diese Weise kann ein Spalt zwischen dem Dach und dem Flügel gebildet werden. Der Spalt kann als Luftkanal wirken. Bei der Fahrt des Schienenfahrzeugs kann ein Luftstrom durch den Spalt durchgehen. Das heißt, dass bei der Fahrt des Schienenfahrzeugs ein Luftstrom unter dem Flügel hindurchgehen kann. Auf diese Weise kann der Luftstrom der Form des Kopfbereichs zumindest teilweise folgen. Insbesondere kann der Luftstrom auf diese Weise der konvexen Form zumindest teilweise folgen.

Außerdem kann bei der Fahrt des Schienenfahrzeugs ein Luftstrom über den Flügel hinweggehen. Der Luftstrom kann der Form des Kopfbereichs zumindest teilweise folgen. Insbesondere kann der Luftstrom der konvexen Form zumindest teilweise folgen.

Bei der Fahrt im Schienenfahrzeugverbund mit einem/dem nachfolgenden Schienenfahrzeug kann der Luftstrom zwischen das erstgenannte Schienenfahrzeug und das nachfolgende Schienenfahrzeug, insbesondere in einen Kuppelbereich, geführt werden. Auf diese Weise kann eine Luftströmung über das nachfolgende Schienenfahrzeug positiv beeinflusst werden. Erfindungsgemäß kann auf diese Weise eine Strömungsgeschwindigkeit an einem Dachstromabnehmer des nachfolgenden Schienenfahrzeugs erhöht werden.

Als Unterseite des Flügels kann die dem Spalt zugewandte Seite des Flügels aufgefasst werden. Weiter kann als Oberseite des Flügels die dem Spalt abgewandte Seite des Flügels bezeichnet werden. Insbesondere sind die Oberseite des Flügels und die Unterseite des Flügels einander abgewandt. Zweckmäßigerweise weist der Flügel zumindest einen gekrümmten Flügelabschnitt auf. Vorzugsweise ist der gekrümmte Flügelabschnitt in dem konvexen Bereich angeordnet. Weiter ist es bevorzugt, wenn der gekrümmte Flügelabschnitt zumindest in Längsrichtung des Schienenfahrzeugs gekrümmt ist. Zweckmäßigerweise folgt die Krümmung des gekrümmten Flügelabschnitts zumindest im Wesentlichen einer Krümmung des konvexen Bereichs.

Auf diese Weise kann bei der Fahrt des Schienenfahrzeugs eine Umlenkung der Luftströmung erreicht werden. Insbesondere kann ein frühzeitiges Abreißen der Luftströmung vermieden werden. Es ist vorteilhaft, wenn sowohl eine Oberseite als auch eine Unterseite des gekrümmten Flügelabschnitts zumindest in Längsrichtung des Schienenfahrzeugs zumindest teilweise gekrümmt ist. Ein Krümmungsradius an der Oberseite des gekrümmten Flügelabschnitts kann sich von einem Krümmungsradius an der Unterseite des gekrümmten Flügelabschnitts unterscheiden. Es ist bevorzugt, wenn der Krümmungsradius an der Oberseite des gekrümmten Flügelabschnitts zumindest im Wesentlichen gleich ist wie ein Krümmungsradius an der Unterseite des gekrümmten Flügelabschnitts.

Es ist vorteilhaft, wenn der gekrümmte Flügelabschnitt zumindest an seiner Oberseite einen Krümmungsradius von mindestens 20 cm, insbesondere von mindestens 25 cm, in Längsrichtung des Schienenfahrzeugs aufweist.

Als erster Flügelabschnitt kann ein erstgenannter Flügelabschnitt aufgefasst werden.

Der Flügel kann einen in Längsrichtung des Schienenfahrzeugs geraden Fortsatz aufweisen. Zweckmäßigerweise schließt sich der Fortsatz tangential an den gekrümmten Flügelabschnitt in einer Richtung weg von einer Schienenfahrzeugmitte an. Es ist bevorzugt, wenn der Fortsatz in dem konvexen Bereich angeordnet ist.

Der gekrümmte Flügelabschnitt und gegebenenfalls der Fortsatz, insbesondere falls letzterer vorgesehen ist, können in Längsrichtung des Schienenfahrzeugs insgesamt mindestens 25 cm, insbesondere mindestens 30 cm, lang sein.

Es ist vorteilhaft, wenn der Flügel zumindest einen in Längsrichtung des Schienenfahrzeugs geraden Flügelabschnitt aufweist. Der in Längsrichtung des Schienenfahrzeugs gerade Flügelabschnitt, kurz auch der gerade Flügelabschnitt, ist vorzugsweise in Längsrichtung des Schienenfahrzeugs zumindest im Wesentlichen parallel zu der Längsachse des Schienenfahrzeugs angeordnet. Weiter ist es bevorzugt, wenn sich der in Längsrichtung des Schienenfahrzeugs gerade Flügelabschnitt tangential an den gekrümmten Flügelabschnitt in einer Richtung hin zur Schienenfahrzeugmitte anschließt.

Beispielsweise kann der in Längsrichtung des Schienenfahrzeugs gerade Flügelabschnitt in einem Bereich des Daches angeordnet sein, welcher sich vorzugsweise an den gekrümmten Bereich des Daches in einer Richtung hin zur Schienenfahrzeugmitte anschließt. Weiter kann der in Längsrichtung des Schienenfahrzeugs gerade Flügelabschnitt in einem Bereich des Daches angeordnet sein, welcher vorzugsweise in Längsrichtung des Schienenfahrzeugs zumindest im Wesentlichen parallel zu der Längsachse des Schienenfahrzeugs verläuft.

Falls der Flügel an einem nachlaufenden Ende des Schienenfahrzeugs angeordnet ist, kann der in Längsrichtung des Schienenfahrzeugs gerade Flügelabschnitt eine Luftströmung zu deren Beeinflussung einfangen. Insbesondere kann eine Oberseite und/oder eine Unterseite des in Längsrichtung des Schienenfahrzeugs geraden Flügelabschnitts (jeweils) eine Luftströmung zu deren Beeinflussung einfangen.

Der in Längsrichtung des Schienenfahrzeugs gerade Flügelabschnitt kann in Längsrichtung des Schienenfahrzeugs mindestens 40 cm lang sein. Insbesondere kann der in Längsrichtung des Schienenfahrzeugs gerade Flügelabschnitt in Längsrichtung des Schienenfahrzeugs mindestens 70 cm lang sein.

Zweckmäßigerweise beträgt ein minimaler Abstand zwischen dem Flügel und dem Dach mindestens 5 cm. Auf diese Weise kann gewährleistet werden, dass der Luftstrom unter dem Flügel hindurch, das heißt durch den Spalt zwischen dem Flügel und dem Dach hindurch, eine ausreichende Volumenmenge an Luft befördert. Weiter kann auf diese Weise eine Umlenkung einer ausreichenden Volumenmenge von Luft gewährleistet werden.

Weiter ist es vorteilhaft, wenn der Abstand zwischen dem Flügel und dem Dach um weniger als 20 %, insbesondere um weniger als 10 %, zwischen verschiedenen Positionen schwankt.

Wie bereits zuvor erwähnt ist es zweckmäßig, wenn zwischen dem Dach und dem Flügel ein Spalt angeordnet ist. Der Spalt kann eine erste Öffnung in Richtung hin zur Schienenfahrzeugmitte aufweisen. Vorzugseise zeigt die erste Öffnung in eine horizontale Richtung. Insbesondere kann die Richtung, in welche die erste Öffnung zeigt, parallel zur Längsachse des Schienenfahrzeugs verlaufen. Weiter kann der Spalt eine zweite Öffnung in einer Richtung weg von der Schienenfahrzeugmitte aufweisen. Vorzugsweise zeigt die zweite Öffnung schräg nach unten. Die Richtung, in welche die zweite Öffnung zeigt, steht vorzugsweise in einem spitzen Winkel zur Längsachse des Schienenfahrzeugs.

Zwischen den Richtungen, in welche die beiden Öffnungen zeigen, kann ein Winkel von mindestens 140°, insbesondere von mindestens 155°, liegen. Weiter kann zwischen den Richtungen, in welche die beiden Öffnungen zeigen, ein Winkel von maximal 170°, insbesondere von maximal 160°, liegen.

Eine Länge des Flügels in Längsrichtung des Schienenfahrzeugs kann mindesten 50 cm, insbesondere mindestens 100 cm, betragen. Weiter kann eine Länge des Flügels in Längsrichtung des Schienenfahrzeugs maximal 250 cm, insbesondere maximal 200 cm, betragen.

Es ist vorteilhaft, wenn eine Breite des Flügels in Querrichtung des Schienenfahrzeugs zumindest im Wesentlichen einer Breite desjenigen Bereich des Kopfbereichs entspricht, in dem der Flügel angeordnet ist.

Der Flügel kann in Querrichtung des Schienenfahrzeugs eine Krümmung aufweisen. Das heißt, dass der gekrümmte Flügelabschnitt, der gerade Fortsatz und/oder der in Längsrichtung des Schienenfahrzeugs gerade Flügelabschnitt jeweils in Querrichtung des Schienenfahrzeugs eine Krümmung aufweisen kann. Die Krümmung des Flügels in Querrichtung des Schienenfahrzeugs ist zweckmäßigerweise an eine Form des Kopfbereichs in Querrichtung des Schienenfahrzeugs angepasst. Beispielsweise kann der Kopfbereich im Bereich seines Daches in Querrichtung des Schienenfahrzeugs konvex gekrümmt sein.

Es ist vorteilhaft, wenn eine genannte Krümmung des Flügels als kontinuierliche Krümmung ausgeführt ist. Weiter kann eine genannte Krümmung des Flügels auch als Facettierung, insbesondere aus mehreren geraden und/oder mehreren gekrümmten Teilelementen, ausgeführt sein.

Es ist bevorzugt, wenn eine Stirnseite des Flügels zumindest eine abgerundete Kante aufweist.

Das Dach des Schienenfahrzeugs kann ein Dachgerät aufweisen. Der Flügel kann zumindest teilweise über dem Dachgerät angeordnet sein. Insbesondere kann der Flügel beabstandet zu dem Dachgerät angeordnet sein.

Vorzugsweise ist der Flügel ein Formteil, insbesondere hergestellt unter Verwendung eines Metallblechs und/oder eines Sandwichelements. Zweckmäßigerweise ist das Sandwichelement ein Element in Sandwichbauweise. Das Sandwichelement kann beispielsweise glasfaserverstärkten Kunststoff und/oder kohlenstofffaserverstärkten Kunststoff, insbesondere als Deckschichten, aufweisen.

Es ist zweckmäßig, wenn das Schienenfahrzeug einen zweiten solchen Kopfbereich mit einem zweiten solchen Flügel aufweist. Der zweite Kopfbereich kann bei der Fahrt des Schienenfahrzeugs an einem vorlaufenden Ende des Schienenfahrzeugs angeordnet sein. Der zweite solche Flügel ist zweckmäßigerweise gleichartig ausgebildet zu dem erstgenannten Flügel. Der zweite solche Flügel kann bei der Fahrt des Schienenfahrzeugs einen zusätzlichen positiven Effekt auf die Luftströmung haben.

Weiter kann auf diese Weise unabhängig von einer Fahrtrichtung immer am nachlaufenden Ende ein solcher Kopfbereich mit einem solchen Flügel angeordnet sein.

Die Erfindung ist auf einen Schienenfahrzeugverbund umfassend mehrere Schienenfahrzeuge der zuvor genannten Art gerichtet Die mehreren Schienenfahrzeuge können in Mehrfachtraktion fahren.

Ferner ist die Erfindung gerichtet auf ein Verfahren mit den Merkmalen des Anspruchs 15.

Bei dem erfindungsgemäßen Verfahren strömt ein erster Luftstrom zwischen dem Dach und dem Flügel hindurch, wobei der erste Luftstrom unter Verwendung des Flügels zumindest teilweise nach unten geleitet wird. Außerdem strömt ein zweiter Luftstrom über den Flügel hinweg, wobei der zweite Luftstrom zumindest im Wesentlichen der Form des Flügels folgt, sodass der zweite Luftstrom unter Verwendung des Flügels zumindest teilweise nach unten geleitet wird.

Das vorfahrende Schienenfahrzeug ist erfindungsgemäß das zuvor genannte Schienenfahrzeug und der Schienenfahrzeugverbund der zuvor genannte Schienenfahrzeugverbund.

Mit dem Verfahren kann sowohl der erste als auch der zweite Luftstrom zwischen das vorfahrende Schienenfahrzeug und das nachfolgende Schienenfahrzeug, insbesondere in einen Kuppelbereich, geführt werden. Auf diese Weise kann eine Luftströmung über das nachfolgende Schienenfahrzeug positiv beeinflusst werden. Insbesondere wird auf diese Weise ein Dachstromabnehmer des nachfahrenden Schienenfahrzeugs zur Abnahme von elektrischer Energie von einer Oberleitung besser angeströmt. Erfindungsgemäß kann eine Strömungsgeschwindigkeit an einem Dachstromabnehmer des nachfolgenden Schienenfahrzeugs erhöht werden.

Die Luftströmung kann derart beeinflusst werden, dass eine Strömungsgeschwindigkeit an dem Dachstromabnehmer des nachfahrenden Schienenfahrzeugs erhöht wird. Weiter kann auf diese Weise ein Unterschied zwischen der Strömungsgeschwindigkeit an dem Dachstromabnehmer des nachfahrenden Schienenfahrzeugs und der Strömungsgeschwindigkeit an einem Dachstromabnehmer des vorfahrenden Schienenfahrzeugs reduziert werden. Die bisher gegebene Beschreibung vorteilhafter Ausgestaltungen der Erfindung enthält zahlreiche Merkmale, die in den einzelnen Unteransprüchen teilweise zu mehreren zusammengefasst wiedergegeben sind. Diese Merkmale können jedoch zweckmäßigerweise auch einzeln betrachtet und zu sinnvollen weiteren Kombinationen zusammengefasst werden. Insbesondere sind diese Merkmale jeweils einzeln und in beliebiger geeigneter Kombination mit dem erfindungsgemäßen Verfahren und der erfindungsgemäßen Vorrichtung kombinierbar. So sind Verfahrensmerkmale auch als Eigenschaft der entsprechenden Vorrichtungseinheit gegenständlich formuliert zu sehen und umgekehrt.

Auch wenn in der Beschreibung bzw. in den Patentansprüchen einige Begriffe jeweils im Singular oder in Verbindung mit einem Zahlwort verwendet werden, soll der Umfang der Erfindung für diese Begriffe nicht auf den Singular oder das jeweilige Zahlwort eingeschränkt sein.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden. Die Ausführungsbeispiele dienen der Erläuterung der Erfindung und beschränken die Erfindung nicht auf die darin angegebene Kombination von Merkmalen, auch nicht in Bezug auf funktionale Merkmale. Außerdem können dazu geeignete Merkmale eines jeden Ausführungsbeispiels auch explizit isoliert betrachtet, aus einem Ausführungsbeispiel entfernt, in ein anderes Ausführungsbeispiel zu dessen Ergänzung eingebracht und mit einem beliebigen der Ansprüche kombiniert werden.

Es zeigen:
- FIG 1: einen Strömungsverlauf einer Luftströmung eines Schienenfahrzeugverbunds nach dem Stand der Technik,
- FIG 2: ein Schienenfahrzeug mit einem Flügel in der Seitenansicht,
- FIG 3: Längsschnitt durch einen Ausschnitt des Schienenfahrzeugs aus FIG 2,
- FIG 4: eine Seitenansicht des Flügels aus FIG 2,
- FIG 5: eine Draufsicht des Flügels aus FIG 2,
- FIG 6: eine Frontansicht des Flügels aus FIG 2 und
- FIG 7: einen Strömungsverlauf einer Luftströmung eines Schienenfahrzeugverbunds mit dem Schienenfahrzeug aus FIG 2 und einem zweiten analogen Schienenfahrzeug.

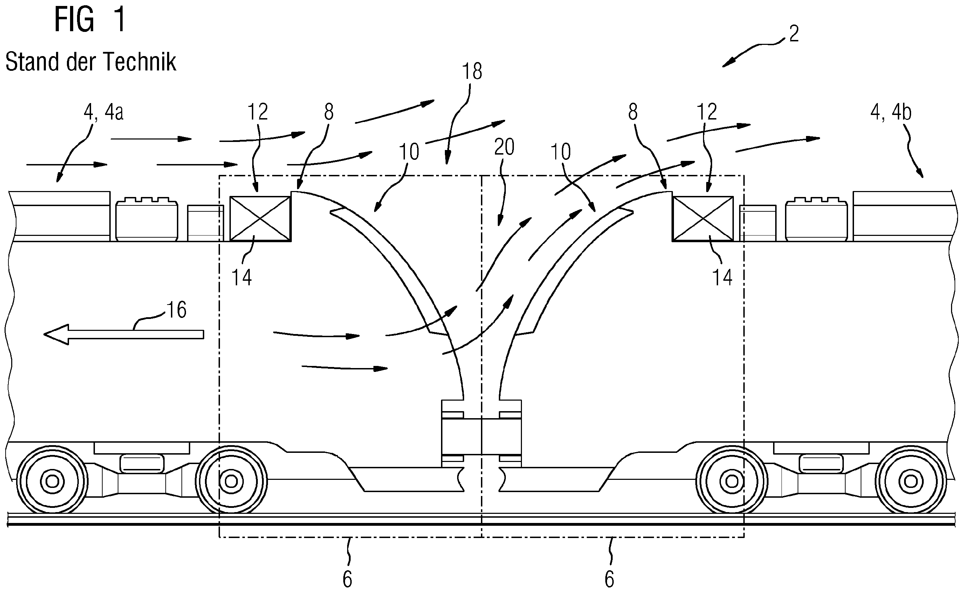

FIG 1 zeigt schematisch einen Schienenfahrzeugverbund 2 nach dem Stand der Technik. Der Schienenfahrzeugverbund 2 umfasst beispielhaft zwei Schienenfahrzeuge 4. Jedes der Schienenfahrzeuge 4 hat zwei Enden, an denen es jeweils einen Kopfbereich 6 aufweist. Die Form des jeweiligen Kopfbereichs 6 zumindest im Bereich seines Daches 8 ist in Längsrichtung des Schienenfahrzeugs zumindest teilweise konvex. In diesem Beispiel schließt sich an den konvexen Abschnitt 10 des Kopfbereichs 6 ein weiterer Abschnitt 12 des Kopfbereichs 6 in Richtung hin zur Schienenfahrzeugmitte an. Der weitere Abschnitt 12 ist in Längsrichtung des Schienenfahrzeugs 2 nicht konvex. Beispielsweise umfasst das Dach 8 des weiteren Abschnitts 12 ein Dachgerät 14.

Der Schienenfahrzeugverbund 2 fährt zeichnungsgemäß nach links, was durch den Pfeil 16 dargestellt ist. Dadurch wird das zeichnungsgemäße linke Schienenfahrzeug 4 zum vorfahrenden Schienenfahrzeug 4a und das zeichnungsgemäß rechte Schienenfahrzeugs 4 zum nachfahrenden Schienenfahrzeug 4b.

Durch die Fahrt des Schienenfahrzeugverbunds 2 kommt es zu einer Luftströmung 18, welche in FIG 1 schematisch durch Pfeile dargestellt ist.

Ein Teil der Luft strömt zunächst über das vorfahrende Schienenfahrzeug 4a hinweg. Bei dem Übergang von dem weiteren Abschnitt 12 des Kopfbereichs 6 in den konvexen Abschnitt 10 des Kopfbereichs 6 kommt es zu einer Ablösung der Luftströmung 18. Die Luftströmung 18 folgt dann nicht dem konvexen Abschnitt 10, sondern geht nach oben weg. Auf diese Weise entsteht ein Unterdruck zwischen dem vorfahrenden Schienenfahrzeug 4a und dem nachfahrenden Schienenfahrzeug 4b, d. h. in dem Kuppelbereich 20 des Schienenfahrzeugverbunds 2.

Ein Teil der Luft, welche an den Seiten des vorfahrenden Schienenfahrzeugs 4a vorbei strömt, strömt aufgrund des Unterdrucks in den Kuppelbereich 20 hinein und wird dann nach oben abgelenkt. Dieser Effekt beeinflusst auch die Luftströmung über das nachfahrende Schienenfahrzeug 4b hinweg.

Sind die Schienenfahrzeuge 4 elektrifiziert und weisen einen Dachstromabnehmer zur Abnahme elektrischer Energie von einer Oberleitung auf, so wird durch die zuvor genannten Effekte die Anströmung des Dachstromabnehmers des nachfahrenden Schienenfahrzeugs 4b beeinflusst. Insbesondere weist die Luftströmung 18 am Dachstromabnehmer des nachfahrenden Schienenfahrzeugs 4b eine geringere Strömungsgeschwindigkeit auf als am Dachstromabnehmer des vorfahrenden Schienenfahrzeugs 4a. Auf diese Weise wird ein Anpressdruck des Dachstromabnehmers des nachfahrenden Schienenfahrzeugs 4b gegen die Oberleitung reduziert.

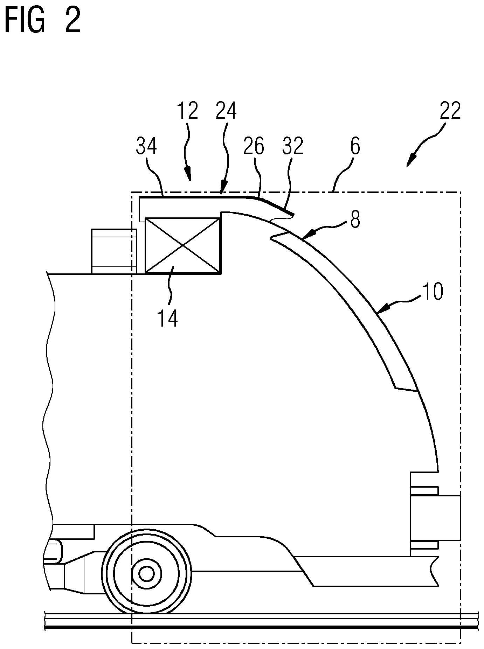

FIG 2 zeigt ein Schienenfahrzeug 22 mit zumindest einem Kopfbereich 6. Die Form des Kopfbereichs 6 ist zumindest im Bereich seines Daches 8 zumindest in Längsrichtung des Schienenfahrzeugs 22 zumindest teilweise konvex. In diesem Beispiel schließt sich an den konvexen Abschnitt 10 des Kopfbereichs 6 ein weiterer Abschnitt 12 des Kopfbereichs 6 in Richtung hin zur Schienenfahrzeugmitte an. Der weitere Abschnitt 12 ist in Längsrichtung des Schienenfahrzeugs 22 nicht konvex. Beispielsweise umfasst das Dach 8 des weiteren Abschnitts 12 ein Dachgerät 14.

Das Schienenfahrzeug 22 weist einen Flügel 24 auf. Der Flügel 24 ist im Kopfbereich 6 des Schienenfahrzeugs 22 auf dem Dach 8 des Kopfbereichs 6 angeordnet. Insbesondere ist der Flügel 24 zumindest teilweise in dem konvexen Abschnitt 10 angeordnet.

Der Flügel 24 ist plattenförmig ausgebildet. Weiter ist der Flügel 24 ein Formteil, hergestellt unter Verwendung eines Metallblechs und/oder eines Sandwichelements.

Eine Form des Flügels 24 folgt zumindest im Wesentlichen einer Form des Kopfbereichs 6.

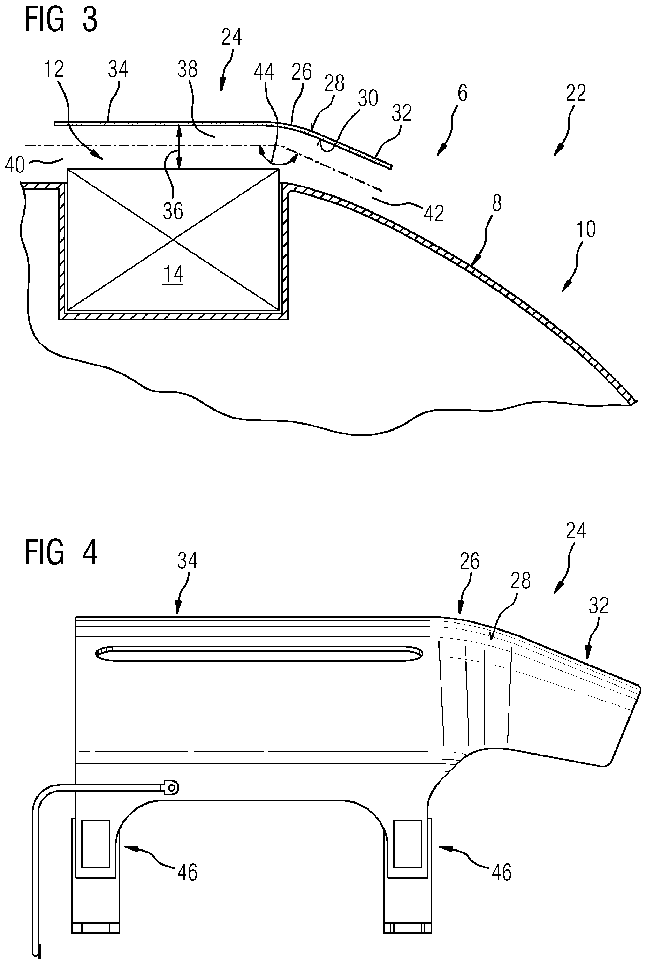

Ein Längsschnitt durch einen Ausschnitt des Schienenfahrzeugs 22 aus FIG 2 ist in FIG 3 dargestellt. Der Längsschnitt verläuft entlang der Längsachse des Schienenfahrzeugs 22 hindurch. In dieser FIG 3 ist auch der Flügel 24 im Längsschnitt dargestellt.

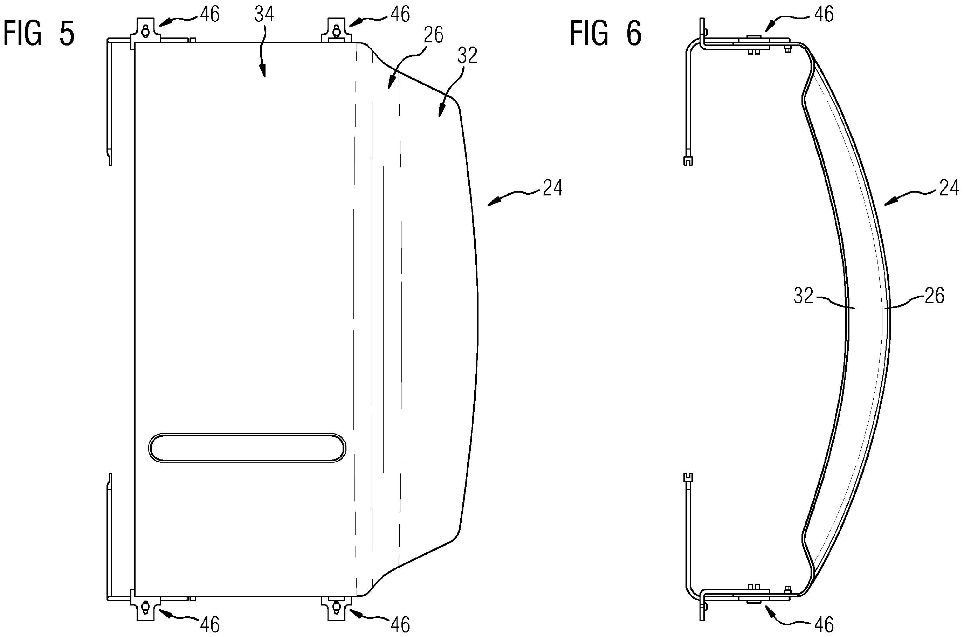

Außerdem zeigt FIG 4 eine Seitenansicht des Flügels 24 aus FIG 2. FIG 5 zeigt eine Draufsicht des Flügels 24 aus FIG 2. Ferner zeigt FIG 6 eine Frontansicht des Flügels 24 aus FIG 2.

Der Flügel 24 weist einen gekrümmten Flügelabschnitt 26 auf, welcher zumindest in Längsrichtung des Schienenfahrzeugs 22 gekrümmt ist (siehe besonders FIG 3 und FIG 4). Der gekrümmte Flügelabschnitt 26 ist in dem konvexen Abschnitt 10 des Kopfbereichs 6 angeordnet. Die Krümmung des gekrümmten Flügelabschnitts 26 folgt zumindest im Wesentlichen einer Krümmung des konvexen Abschnitts 10 des Kopfbereichs 6.

Der gekrümmte Flügelabschnitt 26 weist sowohl an seiner Oberseite 28 als auch an seiner Unterseite 30 einen Krümmungsradius von mindestens 20 cm, insbesondere von mindestens 25 cm, in Längsrichtung des Schienenfahrzeugs auf. Der Krümmungsradius des gekrümmten Flügelabschnitts 26 ist in diesem Beispiel an der Oberseite 28 gleich wie an der Unterseite 30.

Beispielsweise kann im Längsschnitt (entlang der Längsachse des Schienenfahrzeugs) in FIG 3 der Krümmungsradius des gekrümmten Flügelabschnitts 26 in Längsrichtung des Schienenfahrzeugs 22 40 cm betragen.

Der Flügel 24 weist außerdem einen in Längsrichtung des Schienenfahrzeugs 22 geraden Fortsatz 32 auf, welcher sich tangential an den gekrümmten Flügelabschnitt 26 in einer Richtung weg von der Schienenfahrzeugmitte anschließt. Der Fortsatz 32 ist in dem konvexen Abschnitt 10 des Kopfbereichs 6 angeordnet. Aufgrund der tangentialen Anbindung an den gekrümmten Flügelabschnitt 26 in der Richtung weg von der Schienenfahrzeugmitte ergibt sich, dass der Fortsatz 32 in Längsrichtung des Schienenfahrzeugs 22 zum Ende des Schienenfahrzeugs 22 hin nach unten zeigt. Auf diese Weise folgt der Fortsatz 32 der Form des konvexen Abschnitts 12 des Kopfbereichs 6.

Der gekrümmte Flügelabschnitt 26 und der Fortsatz 32 sind insgesamt mindestens 30 cm lang.

Der Flügel 24 weist außerdem einen in Längsrichtung des Schienenfahrzeugs 22 geraden Flügelabschnitt 34 auf, welcher in Längsrichtung des Schienenfahrzeugs 22 zumindest im Wesentlichen parallel zu der Längsachse des Schienenfahrzeugs 22 angeordnet ist und welcher sich tangential an den gekrümmten Flügelabschnitt 26 in einer Richtung hin zur Schienenfahrzeugmitte anschließt.

Der in Längsrichtung des Schienenfahrzeugs 22 gerade Flügelabschnitt 34 ist in Längsrichtung des Schienenfahrzeugs 22 mindestens 70 cm lang.

Auf diese Weise beträgt die Länge des Flügels 24 in Längsrichtung des Schienenfahrzeugs 22 mindestens 100 cm.

Ein minimaler Abstand 36 zwischen dem Flügel 24 und dem Dach 8 beträgt mindestens 5 cm.

Zwischen dem Dach 8 und dem Flügel 24 ist ein Spalt 38 angeordnet, welcher eine erste Öffnung 40 in Richtung hin zu einer Schienenfahrzeugmitte und eine zweite Öffnung 42 in einer Richtung weg von der Schienenfahrzeugmitte aufweist. Die erste Öffnung 40 zeigt in eine Richtung parallel zu der Längsachse des Schienenfahrzeugs 22. Die zweite Öffnung 42 zeigt schräg nach unten.

Vorzugsweise liegt zwischen den Richtungen, in welche die beiden Öffnungen 40, 42 zeigen, ein Winkel 44 im Bereich von 155° bis 160°.

In diesem Beispiel ist die Form des Kopfbereichs 6 im Bereich seines Daches 8 auch in Querrichtung zumindest teilweise konvex.

Der Flügel 24 folgt zumindest im Wesentlichen der Form des Kopfbereichs 6. Das heißt, dass der Flügel 24 in Querrichtung des Schienenfahrzeugs 22 eine Krümmung aufweist (siehe insbesondere FIG 6).

Der Flügel 24 ist über Verbindungselemente 46 mit dem Dach 6 verbunden.

Der zuvor genannte Kopfbereich 6 ist an einem ersten Ende des Schienenfahrzeugs 22 angeordnet. Das Schienenfahrzeug 22 weist einen zweiten solchen Kopfbereich an seinem entgegengesetzten Ende auf (nicht gezeigt). Außerdem weist das Schienenfahrzeug 22 einen zweiten solchen Flügel auf, welcher in dem zweiten Kopfbereich angeordnet ist (nicht gezeigt).

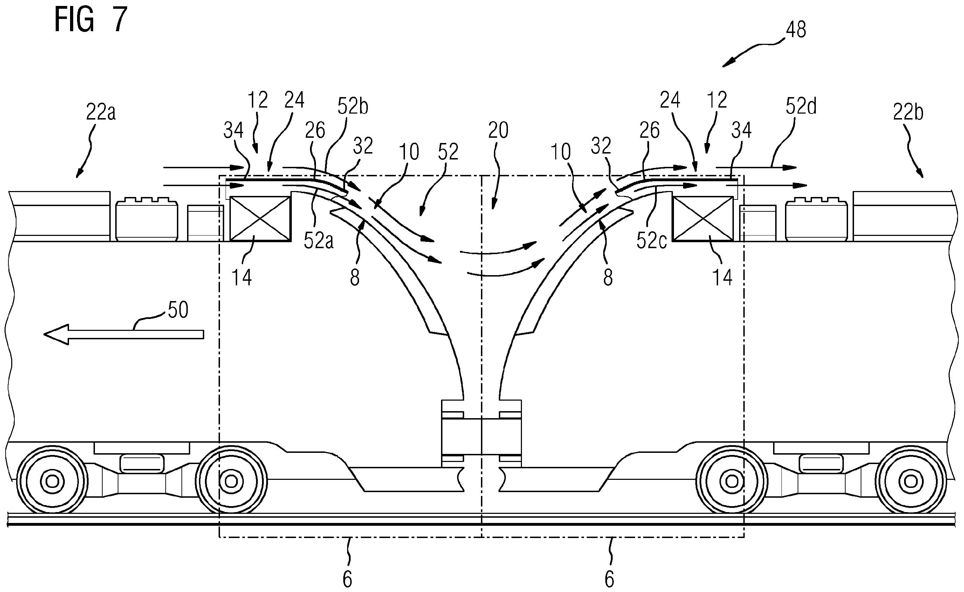

FIG 7 zeigt schematisch einen Schienenfahrzeugverbund 48 mit zwei solcher Schienenfahrzeuge 22 aus FIG 2.

Der Schienenfahrzeugverbund 48 fährt zeichnungsgemäß nach links, was durch den Pfeil 50 dargestellt ist. Dadurch wird das zeichnungsgemäße linke Schienenfahrzeug 22 zum vorfahrenden Schienenfahrzeug 22a und das zeichnungsgemäß rechte Schienenfahrzeugs 22 zum nachfahrenden Schienenfahrzeug 22b.

Durch die Fahrt des Schienenfahrzeugverbunds 48 kommt es zu einer Luftströmung 52, welche in FIG 7 schematisch durch Pfeile dargestellt ist.

Ein Teil der Luft strömt zunächst über das vorfahrende Schienenfahrzeug 22a hinweg bis zum Flügel 24 des vorfahrenden Schienenfahrzeugs 22a.

Ein erster Luftstrom 52a strömt zwischen dem Dach 8 und dem Flügel 24 des vorfahrenden Schienenfahrzeugs 22a hindurch. Dabei wird der erste Luftstrom 52a unter Verwendung des Flügels 24 des vorfahrenden Schienenfahrzeugs 22a zumindest teilweise nach unten geleitet.

Ein zweiter Luftstrom 52b strömt über den Flügel 24 des vorfahrenden Schienenfahrzeugs 22a hinweg, wobei der zweite Luftstrom 52b zumindest im Wesentlichen der Form des Flügels 24 des vorfahrenden Schienenfahrzeugs 22a folgt. Dabei wird der zweite Luftstrom 52b unter Verwendung des Flügels 24 des vorfahrenden Schienenfahrzeugs 22a zumindest teilweise nach unten geleitet.

Die Luftströme 52a und 52b strömen erst am in Längsrichtung des vorfahrenden Schienenfahrzeugs 22a geraden Flügelabschnitt 34 des Flügels 24 des vorfahrenden Schienenfahrzeugs 22a vorbei. Dabei werden die Luftströme 52a und 52b von dem in Längsrichtung des vorfahrenden Schienenfahrzeugs 22a geraden Flügelabschnitt 34 eingefangen.

Dann strömen die Luftströme 52a und 52b am gekrümmten Flügelabschnitt 26 des Flügels 24 des vorfahrenden Schienenfahrzeugs 22a vorbei. Dabei werden die Luftströme 52a und 52b umgelenkt.

Weiter strömen die Luftströme 52a und 52b am Fortsatz 32 des Flügels 24 des vorfahrenden Schienenfahrzeugs 22a vorbei. Dabei werden die Lustströme 52a und 52b zumindest teilweise nach unten geleitet.

Sowohl der erste Luftstrom 52a als auch der zweite Luftstrom 52b werden unter Verwendung des Flügels 24 des vorfahrenden Schienenfahrzeugs 22a zwischen das vorfahrende Schienenfahrzeug 22a und das nachfahrende Schienenfahrzeug 22b, insbesondere in den Kuppelbereich 20, geführt. Auf diese Weise wird die Anströmung des nachfahrenden Schienenfahrzeugs 22b positiv beeinflusst. Auf diese Weise wird die Luftströmung 52 über das nachfahrende Schienenfahrzeug 22b positiv beeinflusst.

Das nachfahrende Schienenfahrzeug 22b weist an seinem vorlaufenden Ende einen Kopfbereich 6 auf, welcher analog wie der Kopfbereich 6 des vorfahrenden Schienenfahrzeugs 22a ausgebildet ist. Das nachfahrende Schienenfahrzeug 22b weist außerdem einen analogen Flügel 24 auf, der im Kopfbereich 6 des nachfahrenden Schienenfahrzeugs 22b analog angeordnet ist.

Die Luftströmung 52 wird zusätzlich von den Flügel 24 des nachfahrenden Schienenfahrzeugs 22b beeinflusst.

Ein erster Luftstrom 52c strömt zwischen dem Dach 8 und dem Flügel 24 des nachfahrenden Schienenfahrzeugs 22b hindurch. Ein zweiter Luftstrom 52d strömt über den Flügel 24 des nachfahrenden Schienenfahrzeugs 22b hinweg, wobei der zweite Luftstrom 52d zumindest im Wesentlichen der Form des Flügels 24 des nachfahrenden Schienenfahrzeugs 22b folgt.

Die Luftströme 52c und 52d strömen am Fortsatz 32 des Flügels 24 des nachfahrenden Schienenfahrzeugs 22b vorbei. Dabei werden die Luftströme 52c und 52d vom Fortsatz 32 eingefangen. Dann strömen die Luftströme 52c und 52d am gekrümmten Flügelabschnitt 26 des Flügels 24 des nachfahrenden Schienenfahrzeugs 22b vorbei. Dabei werden die Luftströme 52c und 52d umgelenkt. Weiter strömen die Luftströme 52a und 52b am in Längsrichtung des nachfahrenden Schienenfahrzeugs 22b geraden Flügelabschnitt 34 des Flügels 24 des nachfahrenden Schienenfahrzeugs 22b vorbei.

Es resultiert eine Luftströmung 52, welche direkt über das nachfahrende Schienenfahrzeug 22b strömt.

Die Luftströmung 52 wird derart beeinflusst, dass eine Strömungsgeschwindigkeit an dem Dachstromabnehmer des nachfahrenden Schienenfahrzeugs 22b erhöht wird. Weiter kann auf diese Weise ein Unterschied zwischen der Strömungsgeschwindigkeit an dem Dachstromabnehmer des nachfahrenden Schienenfahrzeugs 22b und der Strömungsgeschwindigkeit an einem Dachstromabnehmer des vorfahrenden Schienenfahrzeugs 22a reduziert werden. Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den durch die beigefügten Ansprüche definierten Schutzumfang der Erfindung zu verlassen.

## Patentansprüche

1. Schienenfahrzeugverbund, umfassend ein vorfahrendes Schienenfahrzeug (22) mit zumindest einem an einem nachlaufenden Ende des vorfahrenden Schienenfahrzeugs (22) angeordneten Kopfbereich (6), wobei die Form des Kopfbereichs (6) zumindest im Bereich seines Daches (8) zumindest in Längsrichtung des vorfahrenden Schienenfahrzeugs (22) zumindest teilweise konvex ist, und ein einen Dachstromabnehmer aufweisendes, nachfahrendes Schienenfahrzeug (22),**gekennzeichnet durch** zumindest einen Flügel (24), welcher zur Erhöhung der Strömungsgeschwindigkeit an dem Dachstromabnehmer des nachfahrenden Schienenfahrzeugs (22) im Kopfbereich (6) des vorfahrenden Schienenfahrzeugs auf dem Dach (8) zumindest teilweise in dem konvexen Bereich (10) angeordnet ist,
wobei eine Form des Flügels (24) zumindest im Wesentlichen einer Form des Kopfbereichs (6) folgt.

2. Schienenfahrzeugverbund nach Anspruch 1,
**dadurch gekennzeichnet, dass**
der Flügel (24) zumindest einen gekrümmten Flügelabschnitt (26) aufweist, welcher in dem konvexen Bereich (10) angeordnet ist, wobei der gekrümmte Flügelabschnitt (26) zumindest in Längsrichtung des vorfahrenden Schienenfahrzeugs (22) gekrümmt ist, wobei die Krümmung des gekrümmten Flügelabschnitts (26) zumindest im Wesentlichen einer Krümmung des konvexen Bereichs (10) folgt.

3. Schienenfahrzeugverbund nach Anspruch 2,
**dadurch gekennzeichnet, dass**
der gekrümmte Flügelabschnitt (26) zumindest an seiner Oberseite (28) einen Krümmungsradius von mindestens 20 cm, insbesondere von mindestens 25 cm, in Längsrichtung des Schienenfahrzeugs (22) aufweist.

4. Schienenfahrzeugverbund nach Anspruch 2 oder 3,
**dadurch gekennzeichnet, dass**
der Flügel (24) einen in Längsrichtung des vorfahrenden Schienenfahrzeugs (22) geraden Fortsatz (32) aufweist, welcher sich tangential an den gekrümmten Flügelabschnitt (26) in einer Richtung weg von der Schienenfahrzeugmitte anschließt.

5. Schienenfahrzeugverbund nach einem der Ansprüche 2 bis 4, **dadurch gekennzeichnet, dass**
der gekrümmte Flügelabschnitt (26) und ggf. der Fortsatz (32) in Längsrichtung des vorfahrenden Schienenfahrzeugs (22) insgesamt mindestens 25 cm, insbesondere mindestens 30 cm, lang sind.

6. Schienenfahrzeugverbund nach einem der Ansprüche 2 bis 5, **dadurch gekennzeichnet, dass**
der Flügel (24) zumindest einen in Längsrichtung des vorfahrenden Schienenfahrzeugs (22) geraden Flügelabschnitt (34) aufweist, welcher in Längsrichtung des Schienenfahrzeugs vorfahrenden (22) zumindest im Wesentlichen parallel zu der Längsachse des vorfahrenden Schienenfahrzeugs (22) angeordnet ist und welcher sich tangential an den gekrümmten Flügelabschnitt (26) in einer Richtung zur Schienenfahrzeugmitte (22) hin anschließt.

7. Schienenfahrzeugverbund nach Anspruch 6,
**dadurch gekennzeichnet, dass**
der in Längsrichtung des vorfahrenden Schienenfahrzeugs (22) gerade Flügelabschnitt (34) in Längsrichtung des Schienenfahrzeugs (22) mindestens 40 cm, insbesondere mindestens 70 cm, lang ist.

8. Schienenfahrzeugverbund nach einem der vorhergehenden Ansprüche,
**dadurch gekennzeichnet, dass**
ein minimaler Abstand (36) zwischen dem Flügel (24) und dem Dach (8) mindestens 5 cm beträgt.

9. Schienenfahrzeugverbund nach einem der vorhergehenden Ansprüche,
**dadurch gekennzeichnet, dass**
zwischen dem Dach (8) und dem Flügel (24) ein Spalt (38) angeordnet ist, welcher eine erste Öffnung (40) in Richtung hin zu einer Schienenfahrzeugmitte und eine zweite Öffnung (42) in einer Richtung weg von der Schienenfahrzeugmitte aufweist, wobei die zweite Öffnung (42) schräg nach unten zeigt.

10. Schienenfahrzeugverbund nach Anspruch 9,
**dadurch gekennzeichnet, dass**
zwischen den Richtungen, in welche die beiden Öffnungen (40, 42) zeigen, ein Winkel (44) von mindestens 140°, insbesondere von mindestens 155°, und von maximal 170°, insbesondere von maximal 160°, liegt.

11. Schienenfahrzeugverbund nach einem der vorhergehenden Ansprüche,
**dadurch gekennzeichnet, dass**
eine Länge des Flügels (24) in Längsrichtung des vorfahrenden Schienenfahrzeugs (22) mindesten 50 cm, insbesondere mindestens 100 cm, und maximal 250 cm, insbesondere maximal 200 cm, beträgt.

12. Schienenfahrzeugverbund nach einem der vorhergehenden Ansprüche,
**dadurch gekennzeichnet, dass**
der Flügel (24) in Querrichtung des vorfahrenden Schienenfahrzeugs (22) eine Krümmung aufweist.

13. Schienenfahrzeugverbund nach einem der vorhergehenden Ansprüche,
**dadurch gekennzeichnet, dass**
der Flügel (24) ein Formteil, hergestellt unter Verwendung eines Metallblechs und/oder eines Sandwichelements, ist.

14. Schienenfahrzeugverbund nach einem der vorhergehenden Ansprüche,
**gekennzeichnet durch**
einen zweiten solchen Kopfbereich (6) mit einem zweiten solchen Flügel (24).

15. Verfahren zur Beeinflussung einer Luftströmung (52) bei einer Fahrt eines Schienenfahrzeugverbunds (48) nach Anspruch 1, bei welchem Verfahren
- ein erster Luftstrom (52a) zwischen dem Dach (8) und dem Flügel (24) hindurch strömt, wobei der erste Luftstrom (52a) unter Verwendung des Flügels (24) zumindest teilweise nach unten geleitet wird, und
- ein zweiter Luftstrom (52b) über den Flügel (24) hinweg strömt, wobei der zweite Luftstrom (52b) zumindest im Wesentlichen der Form des Flügels (24) folgt, sodass der zweite Luftstrom (52b) unter Verwendung des Flügels (24) zumindest teilweise nach unten geleitet wird.

## Claims

1. Rail vehicle group, comprising a leading rail vehicle (22) with at least one front region (6) which is arranged at a trailing end of the leading rail vehicle (22), the shape of the front region (6) being at least partially convex at least in the region of its roof (8) at least in the longitudinal direction of the leading rail vehicle (22), and further comprising a trailing rail vehicle (22) which has a roof-mounted pantograph, **characterized by** at least one wing (24) which is arranged in the front region (6) of the leading rail vehicle on the roof (8) at least partially in the convex region (10) in order to increase the flow speed on the roof-mounted pantograph of the trailing rail vehicle (22), a shape of the wing (24) at least substantially following a shape of the front region (6).

2. Rail vehicle group according to Claim 1, **characterized in that** the wing (24) has at least one curved wing portion (26) which is arranged in the convex region (10), the curved wing portion (26) being curved at least in the longitudinal direction of the leading rail vehicle (22), the curvature of the curved wing portion (26) at least substantially following a curvature of the convex region (10).

3. Rail vehicle group according to Claim 2, **characterized in that** the curved wing portion (26) has, at least on its upper side (28), a curvature radius of at least 20 cm, in particular of at least 25 cm, in the longitudinal direction of the rail vehicle (22).

4. Rail vehicle group according to Claim 2 or 3, **characterized in that** the wing (24) has a projection (32) which is straight in the longitudinal direction of the leading rail vehicle (22) and tangentially adjoins the curved wing portion (26) in a direction away from the rail vehicle centre.

5. Rail vehicle group according to one of Claims 2 to 4, **characterized in that** the curved wing portion (26) and possibly the projection (32) have a length overall of at least 25 cm, in particular at least 30 cm, in the direction of the leading rail vehicle (22).

6. Rail vehicle group according to one of Claims 2 to 5, **characterized in that** the wing (24) has at least one wing portion (34) which is straight in the longitudinal direction of the leading rail vehicle (22), which is arranged, in the longitudinal direction of the leading rail vehicle (22), at least substantially parallel to the longitudinal axis of the leading rail vehicle (22), and which tangentially adjoins the curved wing portion (26) in a direction towards the rail vehicle centre (22).

7. Rail vehicle group according to Claim 6, **characterized in that** the wing portion (34) which is straight in the longitudinal direction of the leading rail vehicle (22) has a length of at least 40 cm, in particular at least 70 cm, in the longitudinal direction of the rail vehicle (22).

8. Rail vehicle group according to one of the preceding claims, **characterized in that** a minimum spacing (36) between the wing (24) and the roof (8) is at least 5 cm.

9. Rail vehicle group according to one of the preceding claims, **characterized in that** a gap (38) is arranged between the roof (8) and the wing (24), which gap (38) has a first opening (40) in the direction towards a rail vehicle centre and a second opening (42) in a direction away from the rail vehicle centre, the second opening (42) pointing obliquely downwards.

10. Rail vehicle group according to Claim 9, **characterized in that** an angle (44) of at least 140°, in particular of at least 155°, and of at most 170°, in particular of at most 160°, lies between the directions, in which the two openings (40, 42) point.

11. Rail vehicle group according to one of the preceding claims, **characterized in that** a length of the wing (24) is at least 50 cm, in particular at least 100 cm, and at most 250 cm, in particular at most 200 cm, in the longitudinal direction of the leading rail vehicle (22).

12. Rail vehicle group according to one of the preceding claims, **characterized in that** the wing (24) has a curvature in the transverse direction of the leading rail vehicle (22).

13. Rail vehicle group according to one of the preceding claims, **characterized in that** the wing (24) is a moulded part, produced with the use of a metal sheet and/or a sandwich element.

14. Rail vehicle group according to one of the preceding claims, **characterized by** a second front region (6) of this type with a second wing (24) of this type.

15. Method for influencing an air flow (52) during travelling of a rail vehicle group (48) according to Claim 1, in the case of which method:
- a first air stream (52a) flows through between the roof (8) and the wing (24), the first air stream (52a) being guided at least partially downwards with the use of the wing (24), and
- a second air stream (52b) flows over the wing (24), the second air stream (52b) at least substantially following the shape of the wing (24), with the result that the second air stream (52b) is guided at least partially downwards with the use of the wing (24).

## Revendications

1. Convoi de véhicules ferroviaires, comprenant un véhicule (22) ferroviaire allant devant, ayant au moins une partie (6) de tête disposée à un bout venant derrière du véhicule (22) ferroviaire allant devant, dans lequel la forme de la partie (6) de tête est, au moins dans la partie de son toit (8), au moins en partie convexe, au moins dans la direction longitudinale du véhicule (22) ferroviaire allant devant, et un véhicule (22) ferroviaire venant derrière et ayant un appareil de prise de courant de toit, **caractérisé par** au moins une aile (24), qui, pour augmenter la vitesse d'écoulement sur l'appareil de prise de courant de toit du véhicule (22) ferroviaire venant derrière, est montée, dans la partie (6) de tête du véhicule ferroviaire allant devant, sur le toit (8) au moins en partie dans la partie (10) convexe,
dans lequel une forme de l'aile (24) suit au moins pour l'essentiel une forme de la partie (6) de tête.

2. Convoi de véhicules ferroviaires suivant la revendication 1,
**caractérisé en ce que**
l'aile (24) a au moins un segment (26) d'aile incurvé, qui est disposé dans la partie (10) convexe, dans lequel le segment (26) d'aile incurvé est incurvé au moins dans la direction longitudinale du véhicule (22) ferroviaire allant devant, dans lequel la courbure du segment (26) d'aile incurvé suit au moins pour l'essentiel une courbure de la partie (10) convexe.

3. Convoi de véhicules ferroviaires suivant la revendication 2,
**caractérisé en ce que**
le segment (26) d'aile incurvé a au moins sur sa face (28) supérieure un rayon de courbure d'au moins 20 cm, notamment d'au moins 25 cm, dans la direction longitudinale du véhicule (22) ferroviaire.

4. Convoi de véhicules ferroviaires suivant la revendication 2 ou 3,
**caractérisé en ce que**
l'aile (24) a un prolongement (32) droit dans la direction longitudinale du véhicule (22) ferroviaire allant devant et se raccordant tangentiellement au segment (26) d'aile incurvé dans une direction s'éloignant du milieu du véhicule ferroviaire.

5. Convoi de véhicules ferroviaires suivant l'une des revendications 2 à 4,
**caractérisé en ce que**
le segment (26) d'aile incurvé et le cas échéant le prolongement (32) ont, dans la direction longitudinale du véhicule (22) ferroviaire allant devant, une longueur en tout d'au moins 25 cm, notamment d'au moins 30 cm.

6. Convoi de véhicules ferroviaires suivant l'une des revendications 2 à 5,
**caractérisé en ce que**
l'aile (24) a au moins un segment (34) d'aile droit, dans la direction longitudinale du véhicule (22) ferroviaire allant devant, et disposé dans la direction longitudinale du véhicule (22) ferroviaire au moins pour l'essentiel parallèlement à l'axe longitudinal du véhicule (22) ferroviaire allant devant, et qui se raccorde tangentiellement au segment (26) d'aile incurvé dans une direction allant vers le milieu (22) du véhicule ferroviaire.

7. Convoi de véhicules ferroviaires suivant la revendication 6,
**caractérisé en ce que**
le segment (34) d'aile droit, dans la direction longitudinale du véhicule (22) ferroviaire allant devant, a, dans la direction longitudinale du véhicule (22) ferroviaire, une longueur d'au moins 40 cm, notamment d'au moins 70 cm.

8. Convoi de véhicules ferroviaires suivant l'une des revendications précédentes,
**caractérisé en ce qu'**
une distance (36) minimum entre l'aile (24) et le toit (8) est d'au moins 5 cm.

9. Convoi de véhicules ferroviaires suivant l'une des revendications précédentes,
**caractérisé en ce qu'**
il y a entre le toit (8) et l'aile (24) un intervalle (38), qui a une première ouverture (40) dans une direction vers un milieu du véhicule ferroviaire et une deuxième ouverture (42) dans une direction s'éloignant du milieu du véhicule ferroviaire, la deuxième ouverture (42) pointant de manière inclinée vers le bas.

10. Convoi de véhicules ferroviaires suivant la revendication 9,
**caractérisé en ce qu'**
entre les directions, dans lesquelles pointent les deux ouvertures (40, 42), il y a un angle (44) d'au moins 140°, notamment d'au moins 155°, et de 170° au maximum, notamment de 160° au maximum.

11. Convoi de véhicules suivant l'une des revendications précédentes,
**caractérisé en ce qu'**
une longueur de l'aile (24), dans la direction longitudinale du véhicule (22) ferroviaire allant devant, est d'au moins 50 cm, notamment d'au moins 100 cm, et de 250 cm au maximum, notamment de 200 cm au maximum.

12. Convoi de véhicules ferroviaires suivant l'une des revendications précédentes,
**caractérisé en ce que**
l'aile (24) a une courbure dans une direction transversale du véhicule (22) ferroviaire allant devant.

13. Convoi de véhicules ferroviaires suivant l'une des revendications précédentes,
**caractérisé en ce que**
l'aile (24) est une pièce conformée, fabriquée en utilisant une tôle métallique et/ou un élément en sandwich.

14. Convoi de véhicules ferroviaires suivant l'une des revendications précédentes,
**caractérisé par**
une deuxième partie (6) de tête de ce genre ayant une deuxième aile (24) de ce genre.

15. Procédé pour influencer un écoulement (52) d'air lors d'une circulation d'un convoi (48) de véhicules ferroviaires suivant la revendication 1, procédé dans lequel
- un premier courant (52a) d'air passe entre le toit (8) et l'aile (24), le premier courant (52a) d'air étant dévié vers le bas au moins en partie en utilisant l'aile (24), et
- un deuxième courant (52b) d'air passe au-dessus de l'aile (24), le deuxième courant (52b) d'air suivant au moins pour l'essentiel la forme de l'aile (24) de sorte que le deuxième courant (52b) est dévié vers le bas au moins en partie en utilisant l'aile (24).
